# EUROPEAN PATENT APPLICATION

(11) **EP 2 854 371 A1**
(43) Date of publication of application: **01.04.2015**
(21) Application number: 13806201.3
(22) Date of filing: 25.06.2013
(51) Int. Cl.: H04L 29/08

(54) **METHOD AND DEVICE FOR ACHIEVING REMOTE MANIPULATION**

(30) Priority: 26.06.2012 CN 201210213081
(71) Applicant: ZTE Corporation, Shenzhen, Guangdong 518057 (CN)
(72) Inventor: LI, Ning, Shenzhen Guangdong 518057 (CN); XING, Xing, Shenzhen Guangdong 518057 (CN)
(74) Representative: Gervasi, Gemma
(86) International application number: PCT/CN2013/077920
(87) International publication number: WO 2013/189313

(57) **Abstract**

The embodiment of the present invention provides a method and apparatus for realizing remote manipulation. The method includes: a control terminal selecting a remote manipulating intelligent terminal item in a Web UI according to an instruction of a user; the control terminal sending a request for establishing a data link with a target intelligent terminal to an intelligent terminal server, wherein the request for establishing the data link comprises user account information of the target terminal; and after receiving a message that a data link has been established successfully returned by the intelligent terminal server, the control terminal sending a service request to the intelligent terminal server according to a request of the user. Through the embodiments of the present invention, the intelligent terminal device can be convenient for the remote control.

## Description

### Technical Field

The present invention relates to a remote manipulation field, and in particular, to a method and apparatus for realizing remote manipulation.

### Background of the Related Art

With the development of the times, various types of intelligent terminals, such as, a mobile phone, a tablet computer, etc., are increasingly incorporated into our life, and already become an indispensable part of the life. However, the awkward situations often appear in the daily life, for example, the mobile phone is left behind, the important materials are forgot in the tablet computer, etc. At this moment, a method for remote operating the intelligent terminals seems particularly important.

At present, the majority remote operations for the intelligence terminal devices mainly concentrate on backup and recovering aspects of the important data in the intelligent terminal, for example, the information such as contacts, short messages, etc. And it is far from meeting the requirement for obtaining other data on the device. Other remote operations are all operations and analysis based on special commands, and there are problems on the practicability and humanization designs, etc.

### Content of the Invention

The technical problem that embodiments of the present invention require to solve is to provide a method and apparatus for realizing remote manipulation, in order to be convenient for remotely controlling the intelligent terminal devices.

In order to solve the above-mentioned problem, the embodiment of the present invention provides a method for realizing remote manipulation, comprising:
a control terminal selecting a remote manipulating intelligent terminal item in a Web user interface (Web UI) according to an instruction of a user;
the control terminal sending a request for establishing a data link with a target intelligent terminal to an intelligent terminal server, wherein the request for establishing the data link comprises user account information of the target terminal; and
after receiving a message that a data link has been established successfully returned by the intelligent terminal server, the control terminal sending a service request to the intelligent terminal server according to a request of the user.

Alternatively, the above-mentioned method further comprises: before the control terminal sends the request for establishing the data link with the target terminal to the intelligent terminal server, the control terminal linking to Internet, and linking to the intelligent terminal server through a specific domain name.

Alternatively,
the service request comprises: a user name, a link identification and a service request identification of the target intelligent terminal.

Alternatively, the above-mentioned method further comprises: after the terminal sends the service request to the intelligent terminal server, the control terminal receiving service result data returned by the intelligent terminal server, and then displaying the service result data in the WEB UI.

In order to solve the above-mentioned problem, the embodiment of the present invention further provides a control terminal, comprising:
a first module, configured to select a remote manipulating intelligent terminal item in a Web user interface (Web UI) according to an instruction of a user;
a second module, configured to send a request for establishing a data link with a target intelligent terminal to an intelligent terminal server, wherein, the request for establishing the data link comprises user account information of the target terminal; and
a third module, configured to, after receiving a message that a data link has been established successfully returned by the intelligent terminal server, send a service request to the intelligent terminal server according to a request of the user.

Alternatively, the above-mentioned terminal further comprises:
a fourth module, configured to: link to Internet and link to the intelligent terminal server through a specific domain name.

Alternatively, the above-mentioned terminal further comprises:
a fifth module, configured to: after receiving service result data returned by the intelligent terminal server, display the service result data in the WEB UI.

In order to solve the above-mentioned problem, the embodiment of the present invention further provides a method for realizing remote manipulation, comprising:
an intelligent terminal server, after receiving a request for establishing a data link with a target terminal sent out by a remote control terminal, performing a verification according to user account information of the target terminal carried in the request for establishing the data link;
after the intelligent terminal server verifies successfully, establishing the data link between the remote control terminal and the target terminal; and
the intelligent terminal server, after receiving a service request of the remote control terminal, performing a corresponding processing according to a type of the service request, and sending the service request to the target terminal.

Alternatively, the above-mentioned method further comprises:
after the intelligent terminal server establishes the data link between the remote control terminal and the target terminal, the intelligent terminal server providing a unique link identification for that link; establishing a message service queue which takes the link identification as a key word and is used for processing the service request sent by the remote control terminal; and sending the link identification to the remote control terminal.

Alternatively, wherein, the intelligent terminal server performing a corresponding processing according to the service request and sending the service request to the target terminal comprises:
if the intelligent terminal server determines that the service request is a request for obtaining a newly occurred event, then forwarding the service request to the target terminal directly; and after receiving a newly occurred event identification returned by the target terminal, sending the newly occurred event identification to the remote control terminal;
if the intelligent terminal server determines that the service request is a request for obtaining specified information, then inserting the service request into a correspondent message service queue according to a priority of the service request, and sending the service request in the queue to the target terminal; and
if the intelligent terminal server determines that the service request is a real-time service request, then establishing a data channel between the remote control terminal and the target terminal, and sending the service request to the target terminal.

Alternatively, the above-mentioned method further comprises:
after sending the service request to the target terminal, the intelligent terminal server receiving a service result of the target terminal, and then sending the service result to the remote control terminal.

In order to solve the above-mentioned problem, the embodiment of the present invention further provides an intelligent terminal server, comprising:
a first module, configured to: after receiving a request for establishing a data link with a target terminal sent out by a remote control terminal, perform a verification according to user account information of the target terminal carried in the request for establishing the data link;
a second module, configured to: after the first module verifies successfully, establish the data link between the remote control terminal and the target terminal; and
a third module, configured to: after receiving a service request of the remote control terminal, perform a corresponding processing according to a type of the service request, and send the service request to the target terminal through the data link.

Alternatively, the above-mentioned intelligent terminal server further comprises:
a fourth module, configured to: after the second module establishes the data link between the remote control terminal and the target terminal, provide a unique link identification for that link;
a fifth module, configured to: establish a message service queue which takes the link identification as a key word and is used for processing the service request sent by the remote control terminal; and
a six module, configured to: send the link identification to the remote control terminal.

Alternatively, wherein,
the third module is configured to: if determining that the service request is a request for obtaining a newly occurred event, then forward the service request to the target terminal directly, and after receiving a newly occurred event identification returned by the target terminal, send the newly occurred event identification to the remote control terminal; if determining that the service request is a request for obtaining specified information, then insert the service request into a correspondent message service queue according to a priority of the service request, and send the service request in the queue to the target terminal; and if determining that the service request is a real-time service request, then establish a data channel between the remote control terminal and the target terminal, and send the service request to the target terminal.

Alternatively, the above-mentioned intelligent terminal server further comprises:
a seven module, configured to: after receiving a service result of the target terminal, send the service result to the remote control terminal.

In order to solve the above-mentioned problem, the embodiment of the present invention further provides a method for realizing remote manipulation, comprising:
a target terminal receiving a service request of an intelligent terminal server; and
the target terminal performing a corresponding processing according to the service request.

Alternatively, wherein, the target terminal performing the corresponding processing according to the service request comprises:
if the target terminal detects that the service request is a request for obtaining a newly occurred event, then detecting whether a new event is occurred in an specified time period; and if the new event is occurred, then producing a corresponding newly occurred event identification according to the newly occurred event;
if the target terminal detects that the service request is a request for obtaining specified information, then judging whether in a current asynchronous execution queue there is a request same with the service request; if yes, then returning an error code to the intelligent terminal server; if no, then adding the service request into the asynchronous execution queue; and
if the target terminal detects that the service request is a real-time service request, then judging whether in a current real-time execution queue there is a request same with the service request; if yes, then checking the service and operating in real-time a request upper limit at the same time, and if the upper limit is not exceeded, then establishing a link with a corresponding remote control terminal; if the upper limit is exceeded, then returning an error code to the intelligent terminal server; if in the current real-time execution queue there is no request same with the service request, then adding the service request into the real-time execution queue, and establishing a link with the corresponding remote control terminal.

In order to solve the above-mentioned problem, the embodiment of the present invention further provides a terminal, comprising:
a first module, configured to: receive a service request of an intelligent terminal server; and
a second module, configured to: perform a corresponding processing according to the service request.

Alternatively, wherein, the second module comprises:
a first unit, configured to: if detecting that the service request is a request for obtaining a newly occurred event, then detect whether a new event is occurred in an specified time period; and if the new event is occurred, then produce a corresponding newly occurred event identification according to the newly occurred event, and send the newly occurred event identification to the intelligent terminal server;
a second unit, configured to: if detecting that the service request is a request for obtaining specified information, then judge whether in a current asynchronous execution queue there is a request same with the service request; if yes, then return an error code to the intelligent terminal server; if no, then add the service request into the asynchronous execution queue, and return the specified information to the intelligent terminal server; and
a third unit, configured to: if detecting that the service request is a real-time service request, then judge whether in a current real-time execution queue there is a request same with the service request; if yes, then check the service and operate in real-time a request upper limit at the same time, and if the upper limit is not exceeded, then establish a link with a corresponding remote control terminal; if the upper limit is exceeded, then return an error code to the intelligent terminal server; if in the current real-time execution queue there is no request same with the service request, then add the service request into the real-time execution queue, and establish a link with the corresponding remote control terminal.

In sum, the embodiments of the present invention provide methods and apparatuses for realizing remote manipulation, which can help the user, in the case of friendly human-computer interaction, to obtain the data materials required by the user manage and use the mobile phone to guarantee the normal working and living, and provide the reliable sound assurance, to guarantee the security of the personal terminal data of the user. The methods of the present embodiment, compared with the existing methods, have obvious improvement in the aspects, such as, visualization, practicability, and general management, etc. The problem that the user cannot use and obtain the data of the intelligence terminal device temporarily at a short range is solved.

### Brief Description of Drawings

FIG. 1 is a flow chart of a method for realizing remote manipulation according to an embodiment of the present invention;
FIG. 2 is a processing flow chart of an intelligent terminal server for realizing remote manipulation according to an embodiment of the present invention;
FIG. 3 is a processing flow chart of a target intelligent terminal for realizing remote manipulation according to an embodiment of the present invention;
FIG. 4 is a schematic diagram of a remote control terminal according to an embodiment of the present invention;
FIG. 5 is a schematic diagram of an intelligent terminal server according to an embodiment of the present invention;
FIG. 6 is a schematic diagram of a target terminal according to an embodiment of the present invention.

### Preferred Embodiments of the Present Invention

The embodiments of the present invention are described in detail with reference to the accompanying drawings hereinafter. It should be illustrated that, in the case of not conflicting, the embodiments in the present application and features in these embodiments can be combined with each other arbitrarily.

First of all, the remote operation and control defend process (agent) are installed for a target intelligent terminal.

In order to realize the remote operation and control to an intelligence terminal, the selectable target remote intelligent terminal is linked to an intelligent terminal server (Service Sever) through a mobile network or a wireless fidelity (Wi-Fi) and registers an account number which is used for the following remote visit. The target remote intelligent terminal can establish a link with the Service Sever through the mobile network or the Wi-Fi, and the Service Sever will assign a fixed IP for the target intelligent terminal device after establishing the link.

Secondly, a remote control software is installed for a remote control terminal of a remote operation intelligence terminal device, and the remote control software in a form of a user interface (UI) based on Web (Webpage) is selected in the present embodiment. The remote control terminal needs to be linked with the Service Sever based on the UI of the Web through a specific domain name. The advantage of adopting the Web UI is that all operating system platforms can be adapted very good, and there is no need to install any PC end application; it can be operated so long as the place has a network and browser, and it is convenient to be modified and only the server end needs to be modified.

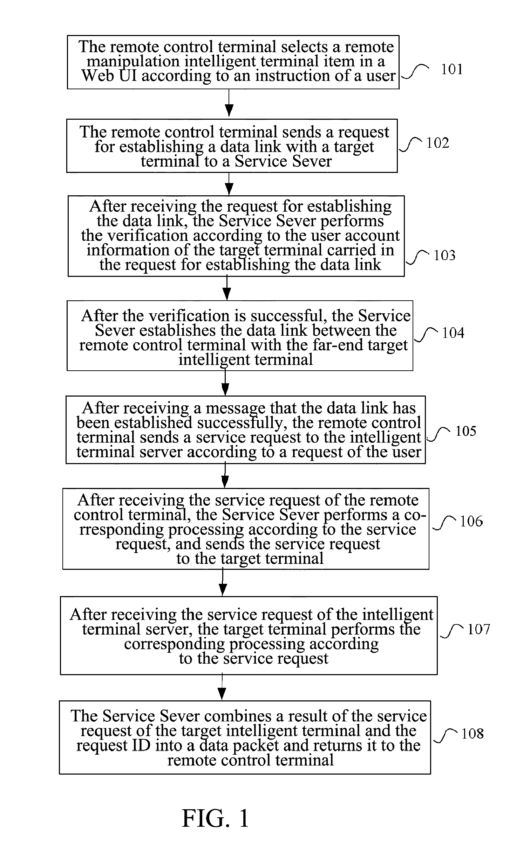

FIG. 1 is a flow chart of a method for realizing remote manipulation according to an embodiment of the present invention; as shown in FIG. 1, the method of the present embodiment includes the following steps.

In step 101, the remote control terminal selects a remote manipulating intelligent terminal item in a webpage user interface (Web UI) according to an instruction of a user.

In step 102, the remote control terminal sends a request for establishing a data link with a target terminal to a Service Sever.

The remote control terminal can be linked to the Internet through the Ethernet, the mobile network or the Wi-Fi in advance, and linked to the Service Sever through a domain name provided by the Service Sever.

In use, the user opens the Web UI of the remote control terminal, and selects the corresponding remote operation and control intelligent terminal item; the intelligence terminal device providing the remote operation sends the registered user name and password information to the Service Sever to perform a security verification.

In step 103, after receiving the request for establishing the data link, the Service Sever performs the verification according to the user account information of the target remote intelligent terminal carried in the request for establishing the data link.

The Service Sever verifies the user name and the password information of the target remote intelligent terminal carried in the request for establishing the link data.

In step 104, after the verification is successful, the Service Sever establishes the data link between the remote control terminal and the far-end target intelligent terminal, and sends an link identification ID to the remote control terminal.

After the data link is established, then the Service Sever provides a unique link identification (Link ID) for this link, and establishes a message service queue which takes the Link ID as a key word and is used for processing the requests sent by the remote control terminal.

In step 105, after receiving a message that the data link has been established successfully, the remote control terminal sends a service request to the intelligent terminal server according to a user's request.

The remote control terminal receives the service request of the user through the Web UI, and sends the service request to the Service Sever, and the data content of the service request includes: the User Nameof the target remote intelligent terminal, the Link ID and the request ID (Req).

In step 106, after receiving the service request of the remote control terminal, the Service Sever performs the corresponding processing according to the service request, and sends the service request to the target terminal.

The Service Sever can forward the service request to the target intelligent terminal through an internal message circulation mechanism according to a priority sequence, to obtain the corresponding data.

In step 107, after receiving the service request of the intelligent terminal server, the target terminal performs the corresponding processing according to the service request.

The agent running in the target intelligent terminal performs an operation after obtaining the request, and combines the data in an appointed mode and transmits to the Service Sever to finish the request.

Specifically, the agent running in the target intelligent terminal obtains the request, and distinguishes the request type of the current request; if the request is a registration callback request (the request for obtaining a newly occurred event) (for example, the user needs to monitor incoming calls or short messages, then the user is notified when there is a new incoming call or a new short message), then a callback identification is returned (the callback identification is used for confirming what data are called back, for example, the data is the new incoming call or the new short message); if the request is an asynchronous request (the request for obtaining specified information) or a real-time request, then the request is issued to a function module to be performed, and the data are combined in the appointed mode and transmitted to the Sever to finish the request.

In step 108, the Service Sever combines the result of the service request of the target intelligent terminal and the request ID into a data packet and returns the data packet to the remote control terminal.

Compared with the related art, adopting the method of the embodiment of the present invention provides a larger space and flexibility progress for the remote manipulating intelligent terminal, and achieves the effect of obtaining the data of the intelligent terminal in real time.

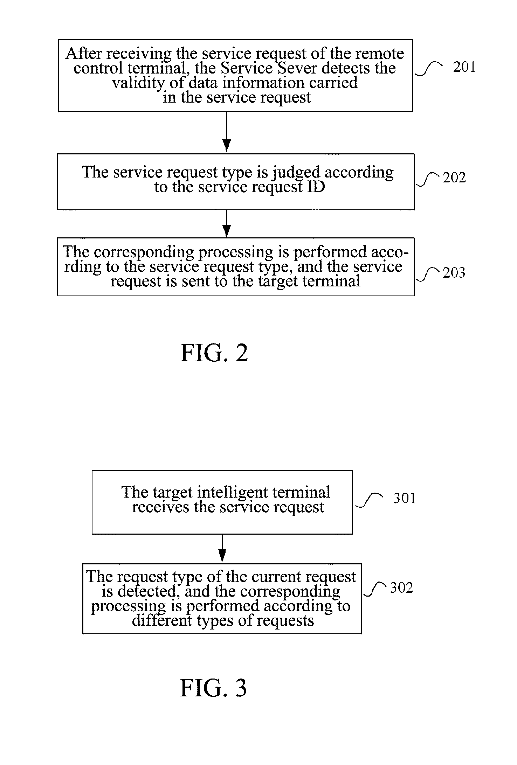

As shown in FIG. 2, a processing flow chart of the intelligent terminal server (Service Sever) realizing the remote manipulation can include the following steps.

In step 201, after receiving the service request of the remote control terminal, the Service

Sever detects the validity of the data information carried in the service request.

The Service Sever receives the service request from the remote control terminal, wherein the service request includes: the user name of the target remote intelligent terminal, the link ID and the request identification, and the format can be shown as the following table:

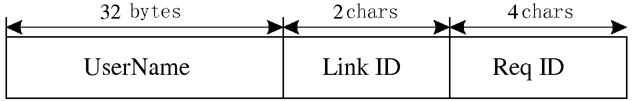

The Service Sever needs to detect the validity of the data item by item: whether the user name exists, whether the link identification is in the current link list, and whether the service request ID is valid.

In step 202, the type of the service request is determined according to the service request ID.

The request can be divided into: a registration callback request, an asynchronous service request and a real-time service request. Wherein, the registration callback request (request for obtaining a new event) needs to obtain a callback identification from the Agent of the target intelligent terminal which is remotely operated and controlled, and is used for reminding the user of the important state change of its target remote intelligent terminal, for example, the incoming call, the newly arrived short message, etc.; the asynchronous service request (request for obtaining a specified information) is the general non-real-time service request message, for example, obtaining contact information, a short message list, a file list of an SD card of the intelligent terminal, etc.; the real-time service request is the service request message which needs to transmit the data in real time, for example, the dial-out call, the incoming call, etc.

In step 203, the corresponding processing is performed according to the type of the service request, and the service request is sent to the target remote intelligent terminal.

If the request is the registration callback request, then it is forwarded to the target intelligent terminal Agent directly for processing, and its returned callback identification with the request ID together are returned to the remote control terminal.

If the request is the asynchronous service request, then it needs to inquire the priority list of the service request ID. The request is inserted into the message service queue of the current Link ID according to the priority of the request, and the service request in the queue is sent to the target remote intelligent terminal.

If the request is the real-time service request, it needs to establish a data channel for transmitting the data in real time, and issues the request to the target intelligent terminal for execution.

As shown in FIG. 3, a processing flow chart of the target intelligent terminal realizing the remote manipulation can include the following steps.

In step 301, the target intelligent terminal receives the service request.

After the target intelligent terminal receives the service request, it can determine the validity of the current request ID.

That is, it inquired in the request ID supported by the current target intelligent terminal; if the request ID is found, then the current request ID is valid.

In step 302, the request type of the current request is detected, and a corresponding processing is performed according to different types of requests.

If it is the registration callback request (that is, the request for obtaining a newly occurred event), then the Agent detects whether a new event occurs in a specified time period; if yes, then a corresponding event identification is generated according to the new event.

If the current request is the asynchronous service request (that is, obtaining specified information), then the Agent compares the request ID with request IDs in the current asynchronous request execution queue; if the request ID being performed is same with the request ID, then an error code is returned; if the request ID being running is not same with the request ID, then the Agent adds the current request ID into the execution queue to send to the specified function modules for executing the request respectively, and returns the appointed information to the intelligent terminal server.

If the current request ID is the real-time service request, the Agent first detects whether there is the current request ID being running in the current real-time service request queue; if yes, then the service is checked while a request upper limit is run in real-time; if the upper limit is not exceeded, that is, a link is established, then a link success message is returned; if the upper limit is exceeded, then an error code is returned directly; if there is no current request ID in the real-time service message queue, then the Agent adds the request ID into the real-time service request queue directly, and establishes the link and returns the link success message.

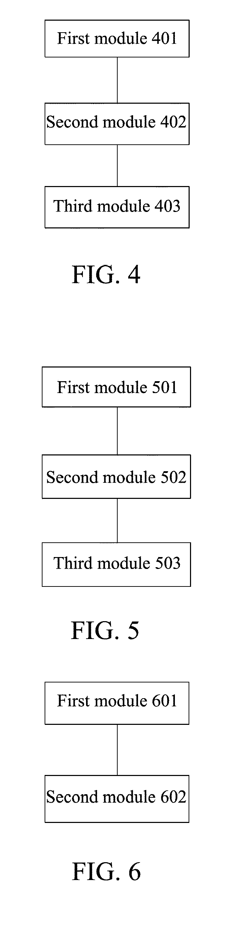

FIG. 4 is a schematic diagram of a remote control terminal according to an embodiment of the present invention; as shown in FIG. 4, it can include the following modules.

A first module 401 is configured to select a remote manipulating intelligent terminal item in a Web user interface (Web UI) according to an instruction of a user.

A second module 402 is configured to send a request for establishing a data link with a target terminal to an intelligent terminal server, wherein, the request for establishing the data link comprises user account information of the target terminal.

A third module 403 is configured to, after receiving a data link established success message, send a service request to the intelligent terminal server through the established data link according to a request of the user.

In a preferable embodiment, the remote control terminal can further include (not shown in the figure):
a fourth module, configured to be linked to Internet and linked to the intelligent terminal server through a specific domain name.

In a preferable embodiment, the remote control terminal can further include (not shown in the figure):
a fifth module, configured to: after receiving service result data returned by the intelligent terminal server, display the service result data in the WEB UI.

FIG. 5 is a schematic diagram of an intelligent terminal server according to an embodiment of the present invention. As shown in FIG. 5, the intelligent terminal server of the present embodiment includes the following modules.

A first module 501 is configured to: after receiving the request for establishing a data link with a target terminal sent out by a remote control terminal, perform verification according to user account information of the target terminal carried in a request for establishing the data link.

A second module 502 is configured to: after the first module verifies successfully, establish the data link between the remote control terminal and the target terminal; and

A third module 503 is configured to: after receiving a service request of the remote control terminal, perform a corresponding processing according to a type of the service request, and send the service request to the target terminal through the data link.

Wherein, the third module is configured to: if determining that the type of the service request is a request for obtaining a newly occurred event, then forward the service request to the target terminal directly, and after receiving a newly occurred event identification returned by the target terminal, send the newly occurred event identification to the remote control terminal; if determining that the service request is a request for obtaining specified information, then insert the service request into a correspondent message service queue according to a priority of the service request, and send the service request in the queue to the target terminal; and if determining that the service request is a real-time service request, then establish a data channel between the remote control terminal and the target terminal, and send the service request to the target terminal.

In a preferable embodiment, the intelligent terminal server can further include (not shown in the figure):
a fourth module, configured to: after the second module establishes the data link between the remote control terminal and the target terminal, provide a unique link identification for that link;
a fifth module, configured to: establish a message service queue which takes the link identification as a key word and is used for processing the service request sent by the remote control terminal; and
a six module, configured to: send the link identification to the remote control terminal.

In a preferable embodiment, the intelligent terminal server can further include (not shown in the figure):
a seven module, configured to: after receiving a service result of the target terminal, send the service result to the remote control terminal.
FIG. 6 is a schematic diagram of a target terminal according to an embodiment of the present invention. As shown in FIG. 6, the target terminal of the present embodiment includes the following modules.

A first module 601 is configured to: receive a service request of an intelligent terminal server; and

A second module 602 is configured to: perform a corresponding processing according to a type of the service request.

Wherein, the second module can include:
a first unit, configured to: if detecting that the type of the service request is a registration callback request, then generate a callback identification, and send the callback identification to the intelligent terminal server;
a second unit, configured to: if detecting that the type of the service request is a asynchronous service request, then judge whether in a current asynchronous execution queue there is a request same with the service request; if yes, then return an error code to the intelligent terminal server; if no, then add the service request into the asynchronous execution queue, and return the specified information to the intelligent terminal server; and
a third unit, configured to: if detecting that the type of the service request is a real-time service request, then judge whether in a current real-time execution queue there is a request same with the service request; if yes, then check the service and operate in real-time a request upper limit at the same time, and if the upper limit is not exceeded, then establish a link with a corresponding remote control terminal; if the upper limit is exceeded, then return an error code to the intelligent terminal server; if in the current real-time execution queue there is no request same with the service request, then add the service request into the real-time execution queue, and establish a link with the corresponding remote control terminal.

It can be understood by those skilled in the art that all or part of steps in the above-mentioned methods can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function modules. The present invention is not limit to any specific form of the combination of the hardware and software.

The above description is only the preferred embodiments of the present invention. It is apparent to those skilled in the art that the present invention can have a variety of other embodiments. Those skilled in the art can make the corresponding modifications and variations according to the embodiments of the present invention without departing from the spirit and essence of the present invention. And all of these modifications or the variations should be embodied in the scope of the appending claims of the present invention.

### Industrial Applicability

The embodiments of the present invention provide methods and apparatuses for realizing remote manipulation, which can help the user, in the case of friendly human-computer interaction, to obtain the data materials required by the user manage and use the mobile phone to guarantee the normal working and living, and provide the reliable sound assurance, to guarantee the security of the personal terminal data of the user. The methods of the present embodiment, compared with the existing methods, have obvious improvement in the aspects, such as, visualization, practicability, and general management, etc. The problem that the user cannot use and obtain the data of the intelligence terminal device temporarily at a short range is solved.

## Claims

1. A method for realizing remote manipulation, comprising:
a control terminal selecting a remote manipulating intelligent terminal item in a Web user interface (Web UI) according to an instruction of a user;
the control terminal sending a request for establishing a data link with a target intelligent terminal to an intelligent terminal server, wherein the request for establishing the data link comprises user account information of the target terminal; and
after receiving a message that a data link has been established successfully returned by the intelligent terminal server, the control terminal sending a service request to the intelligent terminal server according to a request of the user.

2. The method according to claim 1, further comprising:
before the control terminal sends the request for establishing the data link with the target terminal to the intelligent terminal server, the control terminal linking to Internet, and linking to the intelligent terminal server through a specific domain name.

3. The method according to claim 1, wherein,
the service request comprises: a user name, a link identification and a service request identification of the target intelligent terminal.

4. The method according to any one of claims 1-3, further comprising:
after the control terminal sends the service request to the intelligent terminal server, the control terminal receiving service result data returned by the intelligent terminal server, and then displaying the service result data in the WEB UI.

5. A control terminal, comprising:
a first module, configured to select a remote manipulating intelligent terminal item in a Web user interface (Web UI) according to an instruction of a user;
a second module, configured to send a request for establishing a data link with a target intelligent terminal to an intelligent terminal server, wherein, the request for establishing the data link comprises user account information of the target terminal; and
a third module, configured to, after receiving a message that a data link has been established successfully returned by the intelligent terminal server, send a service request to the intelligent terminal server according to a request of the user.

6. The control terminal according to claim 5, further comprising:
a fourth module, configured to: link to Internet and link to the intelligent terminal server through a specific domain name.

7. The control terminal according to claim 5 or 6, further comprising:
a fifth module, configured to: after receiving service result data returned by the intelligent terminal server, display the service result data in the WEB UI.

8. A method for realizing remote manipulation, comprising:
an intelligent terminal server, after receiving a request for establishing a data link with a target terminal sent out by a remote control terminal, performing a verification according to user account information of the target terminal carried in the request for establishing the data link;
after the intelligent terminal server verifies successfully, establishing the data link between the remote control terminal and the target terminal; and
the intelligent terminal server, after receiving a service request of the remote control terminal, performing a corresponding processing according to a type of the service request, and sending the service request to the target terminal.

9. The method according to claim 8, further comprising:
after the intelligent terminal server establishes the data link between the remote control terminal and the target terminal, the intelligent terminal server providing a unique link identification for that link;
establishing a message service queue which takes the link identification as a key word and is used for processing the service request sent by the remote control terminal; and
sending the link identification to the remote control terminal.

10. The method according to claim 8, wherein,
the intelligent terminal server performing a corresponding processing according to the service request and sending the service request to the target terminal comprises:
if the intelligent terminal server determines that the service request is a request for obtaining a newly occurred event, then forwarding the service request to the target terminal directly; and after receiving a newly occurred event identification returned by the target terminal, sending the newly occurred event identification to the remote control terminal;
if the intelligent terminal server determines that the service request is a request for obtaining specified information, then inserting the service request into a correspondent message service queue according to a priority of the service request, and sending the service request in the queue to the target terminal; and
if the intelligent terminal server determines that the service request is a real-time service request, then establishing a data channel between the remote control terminal and the target terminal, and sending the service request to the target terminal.

11. The method according to any one of claims 8-10, further comprising:
after sending the service request to the target terminal, the intelligent terminal server receiving a service result of the target terminal, and then sending the service result to the remote control terminal.

12. An intelligent terminal server, comprising:
a first module, configured to: after receiving a request for establishing a data link with a target terminal sent out by a remote control terminal, perform a verification according to user account information of the target terminal carried in the request for establishing the data link;
a second module, configured to: after the first module verifies successfully, establish the data link between the remote control terminal and the target terminal; and
a third module, configured to: after receiving a service request of the remote control terminal, perform a corresponding processing according to a type of the service request, and send the service request to the target terminal through the data link.

13. The intelligent terminal server according to claim 12, further comprising:
a fourth module, configured to: after the second module establishes the data link between the remote control terminal and the target terminal, provide a unique link identification for that link;
a fifth module, configured to: establish a message service queue which takes the link identification as a key word and is used for processing the service request sent by the remote control terminal; and
a six module, configured to: send the link identification to the remote control terminal.

14. The intelligent terminal server according to claim 12, wherein,
the third module is configured to: if determining that the service request is a request for obtaining a newly occurred event, then forward the service request to the target terminal directly, and after receiving a newly occurred event identification returned by the target terminal, send the newly occurred event identification to the remote control terminal; if determining that the service request is a request for obtaining specified information, then insert the service request into a correspondent message service queue according to a priority of the service request, and send the service request in the queue to the target terminal; and if determining that the service request is a real-time service request, then establish a data channel between the remote control terminal and the target terminal, and send the service request to the target terminal.

15. The intelligent terminal server according to any one of claims 12-14, further comprising:
a seven module, configured to: after receiving a service result of the target terminal, send the service result to the remote control terminal.

16. A method for realizing remote manipulation, comprising:
a target terminal receiving a service request of an intelligent terminal server; and
the target terminal performing a corresponding processing according to the service request.

17. The method according to claim 16, wherein, the target terminal performing the corresponding processing according to the service request comprises:
if the target terminal detects that the service request is a request for obtaining a newly occurred event, then detecting whether a new event is occurred in an specified time period; and if the new event is occurred, then producing a corresponding newly occurred event identification according to the newly occurred event, and sending the newly occurred event identification to the intelligent terminal server;
if the target terminal detects that the service request is a request for obtaining specified information, then judging whether in a current asynchronous execution queue there is a request same with the service request; if yes, then returning an error code to the intelligent terminal server; if no, then adding the service request into the asynchronous execution queue, and returning the specified information to the intelligent terminal server; and
if the target terminal detects that the service request is a real-time service request, then judging whether in a current real-time execution queue there is a request same with the service request; if yes, then checking the service and operating in real-time a request upper limit at the same time, and if the upper limit is not exceeded, then establishing a link with a corresponding remote control terminal; if the upper limit is exceeded, then returning an error code to the intelligent terminal server; if in the current real-time execution queue there is no request same with the service request, then adding the service request into the real-time execution queue, and establishing a link with the corresponding remote control terminal.

18. A terminal, comprising:
a first module, configured to: receive a service request of an intelligent terminal server; and
a second module, configured to: perform a corresponding processing according to the service request.

19. The terminal according to claim 18, wherein, the second module comprises:
a first unit, configured to: if detecting that the service request is a request for obtaining a newly occurred event, then detect whether a new event is occurred in an specified time period; and if the new event is occurred, then produce a corresponding newly occurred event identification according to the newly occurred event, and send the newly occurred event identification to the intelligent terminal server;
a second unit, configured to: if detecting that the service request is a request for obtaining specified information, then judge whether in a current asynchronous execution queue there is a request same with the service request; if yes, then return an error code to the intelligent terminal server; if no, then add the service request into the asynchronous execution queue, and return the specified information to the intelligent terminal server; and
a third unit, configured to: if detecting that the service request is a real-time service request, then judge whether in a current real-time execution queue there is a request same with the service request; if yes, then check the service and operate in real-time a request upper limit at the same time, and if the upper limit is not exceeded, then establish a link with a corresponding remote control terminal; if the upper limit is exceeded, then return an error code to the intelligent terminal server; if in the current real-time execution queue there is no request same with the service request, then add the service request into the real-time execution queue, and establish a link with the corresponding remote control terminal.
